# EUROPÄISCHE PATENTSCHRIFT

(11) **EP 0 901 979 B1**
(45) Veröffentlichungstag und Bekanntmachung des Hinweises auf die Patenterteilung: **12.11.2003**
(21) Anmeldenummer: 98114845.5
(22) Anmeldetag: 07.08.1998
(51) Int. Cl.: B65H 54/42

(54) **Spultrommelantrieb einer Kreuzspulen herstellenden Textilmaschine**
Driving of the touch roller of a textile machine for making cross-wound bobbins
Dispositif d'entraînement du tambour de contact dans une machine textile pour la production de bobines à spires croisées

(30) Priorität: 16.08.1997 DE 19735581
(43) Veröffentlichungstag der Anmeldung: 17.03.1999
(73) Patentinhaber: Saurer GmbH & Co. KG, 41069 Mönchengladbach (DE)
(72) Erfinder: Hermanns, Ferdinand-Josef, Dr., 41812 Erkelenz (DE)

(56) Entgegenhaltungen:
- EP-A- 0 265 995
- EP-A- 0 314 800
- FR-A- 2 181 371
- US-A- 4 680 518
- FÖLLINGER OTTO: "Regelungstechnik" 1990 , HÜTHIG BUCH VERLAG , HEIDELBERG XP002085336 * Seite 501 - Seite 511 *
- KO J -S ET AL: "ROBUST DIGITAL POSITION CONTROL OF BRUSHLESS DC MOTOR WITH ADAPTIVELOAD TORQUE OBSERVER" IEE PROCEEDINGS: ELECTRIC POWER APPLICATIONS, Bd. 141, Nr. 2, PART B, 1. März 1994, Seiten 63-70, XP000450520

## Beschreibung

Die Erfindung betrifft einen Spultrommelantrieb entsprechend dem Oberbegriff des ersten Patentanspruchs (siehe auch EP-A-0 265 995).

Bei Spulmaschinen ist es beispielweise durch die DE 43 36 312 A1 bekannt, die Auflaufspule mittels einer Friktionswalze, einer sogenannten Spultrommel, die gleichzeitig auch den Faden verlegt, anzutreiben. Die Spultrommel jeder Spulstelle verfügt dabei über einen eigenen Antrieb, der vom Spulstellenrechner angesteuert wird. Die Spultrommelantriebe sind häufig als elektronisch kommutierbare Gleichstrommotoren ausgebildet, da solche Antriebe vom Aufbau her einfach und daher relativ kostengünstig sind.

Bei derartigen Gleichstrommotoren wird die Kommutierung des Antriebsstromes über Hall-Sensoren gesteuert.
Ähnliche Hall-Sensoren werden auch zur Erfassung der Drehzahl der Spultrommelantriebe eingesetzt. Das heißt, ein Winkelgebersystem stellt Drehzahlinformationen bereit, die mit Hilfe bekannter Regelverfahren, zum Beispiel unter Verwendung eines PID-Reglers, in eine vorgegebene Spultrommeldrehzahl umgesetzt werden.

Bei diesen bekannten Regelsystemen wird die Drehzahlregelung allerdings immer dann schwierig, wenn die Spultrommel mit niedriger Drehzahl umläuft, was beispielsweise in der Anlaufphase der Fall ist. Bei niedrigen Drehzahlen sind diese bekannten Sensorsysteme aufgrund ihrer relativ groben Winkelauflösung unterhalb einer bestimmten Drehzahl nicht mehr in der Lage, ausreichend genaue Informationen über die Winkelstellungen des Rotors des Antriebsmotors zu liefern, so daß eine ruckfreie Spultrommeldrehung oft nicht mehr gegeben ist. Steht beispielsweise ein Hall-Sensor-System mit zwei um 90 Grad versetzten Hall-Sensoren und ein Magnetring mit beispielsweise 32 Polpaaren zur Verfügung, ist eine Winkelauflösung und damit die Erkennung der Drehbewegung des Rotors des Antriebs nur in Schritten von ca. 2,8 Grad möglich.

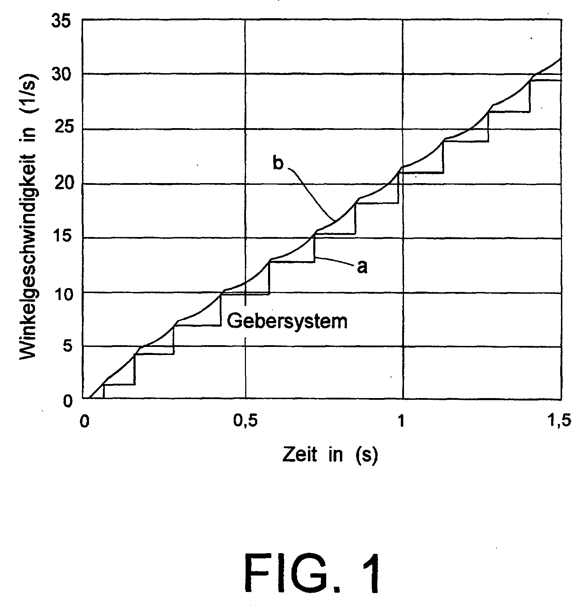

Wie durch die Kurve a der Figur 1 angedeutet, reicht eine solche relativ grobe Winkelauflösung für die Regelung zur Stromkommutierung eines Antriebsmotors nicht aus, um bei dem dynamischen System Antrieb-Spultrommel einen gleichmäßigen Anlauf sowie Rückwärtslauf bei der Fadenendsuche sicherzustellen. Aus der Kurve a in Fig. 1 ist ersichtlich, daß bei den bekannten Regelsystemen statt einer linearen Zunahme der Winkelgeschwindigkeit eine stufenweise Beschleunigung stattfindet. Ein derartig ruckhafter Lauf stört insbesondere beim Hochlauf der Spultrommel nach einer Fadenverbindung, da es dadurch zu ungleichmäßigen Fadenspannungen kommt, die sich sowohl auf die Garnqualität als auch auf den Spulenaufbau negativ auswirken. Auch beim langsamen Lauf der Spultrommelzum Beispiel während der fadensuche, kann es zu Störungen im Wickelbetrieb kommen, weil der unrunde Lauf der Spultrommel beispielsweise zur Schlaufenbildung bei dem auf die Kreuzspule auflaufenden Garn führen kann.

Der unrunde Lauf des Antriebsmotors und damit der Spultrommel bei niedrigen Drehzahlen könnte zwar durch den Einsatz eines Sensorsystems mit einer entsprechend hohen Winkelauflösung vermieden werden, jedoch ist der für solche hochauflösende Systeme erforderliche Aufwand relativ groß. Diese Systeme sind daher recht kostspielig, wobei die Kosten mit der erzielbaren Genauigkeit bei der Winkelauflösung stark ansteigen.

Die EP-A-0 265 995 beschreibt eine Antriebssteuerung eines Motors, wie sie im wesentlichen bereits aus der DE 43 36 312 A1 bekannt ist. Bei der Drehzahlregelung derartiger bekannter Regelsysteme treten die bereits oben geschilderten Probleme auf. Ein ruckhafter Lauf, insbesondere beim Hochlauf der Spultrommel, führt zu Nachteilen wie ungleichmäßige Fadenspannung. Mit der in der EP-A-265 995 beschriebenen Steuerung werden diese Nachteile nicht behoben.

Die US-A-4 680 518 beschreibt eine Steuerung eines Servomotors. Der Servomotor wird für den Antrieb eines Werkzeuges an der Werkzeugmaschine oder eines Industrieroboters eingesetzt. Die beschriebene Steuerung dient dazu, bei einer vorgegebenen niedrigen Geschwindigkeit diese Geschwindigkeit beizubehalten. Wenn die von einem Drehzahlmesser in die Steuerung eingespeisten Impulse einen Fehler in Form einer Abweichung vom SOLL-Wert der vorgegebenen Geschwindigkeit signalisieren, wird die Steuerung aktiviert, sofern eine vorgegebene Geschwindigkeit unterschritten ist. Mit der Steuerung wird die abweichende Geschwindigkeit ausgleichend über fünf Prozeßschritte wieder auf die SOLL-Geschwindigkeit gebracht. Damit soll eine abrupte Korrektur der Geschwindigkeit auf den vorgegebenen Wert und somit eine nachteilige Störung der gleichmäßigen Rotation des Motors bei gleichbleibenden niedrigen Betriebsdrehzahlen vermieden werden. Die IST-Umdrehungszahl des Motors wird mit einem hochauflösenden digitalen Drehzahlmesser detektiert. Der Drehzahlmesser liefert, je nach Ausführung, zwischen mehrere tausend und 20.000 Impulse pro Umdrehung des Motors. Der Aufwand für diese hochauflösenden Drehzahlmesser ist sehr groß. Solche Drehzahlmesser sind aus Kostengründen für den Einsatz an Textilmaschinen mit einer Vielzahl von Arbeitsstellen, wie Spulmaschinen oder Spinn-/Spulmaschinen, nicht geeignet.

Der vorliegenden Erfindung liegt daher die Aufgabe zugrunde, einen kostengünstigen Spultrommelantrieb zu schaffen, der einen einwandfreien Rundlauf sowohl in der Anlaufphase als auch bei niedrigen Drehzahlen gewährleistet.

Diese Aufgabe wird erfindungsgemäß durch eine Vorrichtung mit den Merkmalen des Anspruchs 1 gelöst.

Vorteilhafte Ausgestaltungen der Erfindung sind Gegenstand der Unteransprüche.

Der erfindungsgemäße Spultrommelantrieb hat den Vorteil, daß trotz der Verwendung eines kostengünstigen, grobauflösenden Winkelgebersystems auch bei niedrigen Drehzahlen des Antriebsmotors ein ruckfreier Lauf der Spultrommel gewährleistet ist. Durch den Einsatz eines Modells, das in den Regelkreis zur Regelung der Antriebsdrehzahl eingeschaltet, den Lauf des realen Systems Antrieb-Spultrommel simuliert, wird sichergestellt, daß der Antrieb auch bei niedrigen Drehzahlen, d.h, bei Drehzahlen unterhalb eines Mindestdrehzahlniveaus keine Tendenz zu einem ruckartigen Lauf aufweist. Durch die Kopplung des Modells an den Ausgang der realen Strecke wird das Modell ständig an den realen Drehzahlverlauf angeglichen.

Vorzugsweise wird dabei in einem Rechner der Spulmaschine oder der jeweiligen Spulstelle anhand der bekannten Antriebs- und Spultrommeldaten das Modell des Systems Antrieb-Spultrommel in digitaler Form aufgebaut. Dieses Modell kann jedoch auch extern analog mitgeführt werden.
Das Modell liefert dem Regler die von dem grobauflösenden Winkelgebersystem nicht lieferbaren zwischen dessen Meßimpulsen liegenden Zustandsgrößen zur Regelung der Drehzahl des Antriebsmotors der Spultrommel.

Durch Einsatz eines Schalters kann wahlweise bei genügend hoher Impulsdichte des grobauflösenden Winkelgebersystems das simulierte Modell vom Regelkreis abgekoppelt werden, während eine Zustandsgröße vom Ausgang der realen Srecke dem Regler direkt zugeführt wird. Bei Unterschreiten eines Schwellwertes wird das Modell wieder wirksam, während dann die direkte Kopplung des Ausgangs der realen Strecke zum Regler unterbrochen ist.

Das Modell kann beispielsweise nach Art eines sogenannten Luenberger-Beobachters arbeiten. Beobachter sind bekannt und beispielsweise in dem Fachbuch 'Regelungstechnik' von Otto Föllinger, 1985, Dr.Alfred Hüthig Verlag Heidelberg, ausführlich beschrieben. Auf den Seiten 340 ff. dieses Fachbuches sind auch entsprechende Ausführungen zum vorgenannten 'Luenberger-Beobachter' gemacht.

Dem Modell werden dieselben Stellgrößen vorgegeben wie dem tatsächlichen Antrieb. Durch die Kombination des Ausgangssignals des Modells mit dem gemessenen IST-Signal des Winkelgebersystems an einem Summenpunkt wird eine Größe erzeugt, durch die das dynamische Verhalten des Modells dem der realen Strecke angepaßt werden kann. Die Modellzustände werden anschließend dem Drehzahlregler des Antriebes, beispielsweise einem Zustandsregler, zugeführt. Dieser Regler beeinflußt nun aufgrund der Modellzustände die reale Strecke. Das heißt, der zugeschaltete Beobachter ermöglicht es, die inneren Zustände, wie sie in der realen Strecke vorliegen, mit genügender Genauigkeit dem Regler zur Verfügung zu stellen. Eine höhere Winkelauflösung des Winkelgebersystems ist dafür nicht erforderlich. Die Signalverarbeitung im Regelkreis ist abhängig von der eingesetzten Technik und kann digital oder analog erfolgen, ohne daß dadurch ein Einfluß auf das wesen der Erfindung ausgeübt wird.

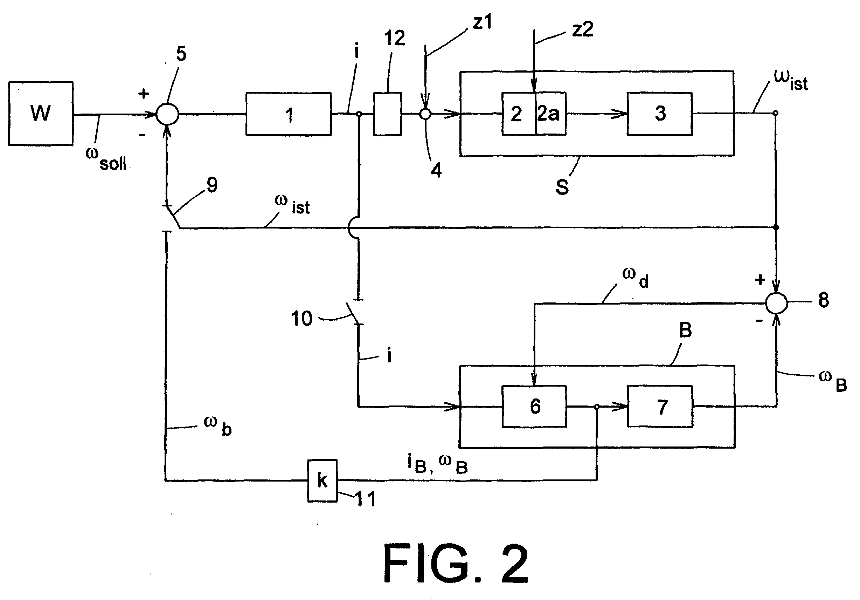

Anhand der Fig. 2 wird das Verfahren zum Regeln des erfindungsgemäßen Spultrommelantriebes näher erläutert. Bei genügend hohen Drehzahlen eines Gleichstrommotors genügt zur Regelung des Antriebsstromes i ein einfacher Regelkreis, wobei dem Regler 1 als Regelgröße die tatsächliche Winkelgeschwindigkeit ωist des Antriebes zugeführt wird.
Die Führungsgröße ω, die Spulgeschwindigkeit, erhält der Regler 1 durch entsprechende Einstellungen eines Sollwertgebers W. Der Antrieb und die Spultrommel bilden die Hauptbestandteile der realen Strecke S. Auf das Antriebs-Spultrommel-System 2 wirken Störgrößen z1 und z2 ein. Eine der von außen im Summenpunkt 4 auf die Strecke S wirkende Störgröße z1 ist beispielsweise der Fehler der Stromendstufe 12, die z.B. eine Pulsweitenmodulation durchführt. Als weitere Störgrößen z2 wirken alle inneren Störgrößen des Systems 2 Antrieb-Spultrommel, wie beispielsweise die innere Reibung des Motors, die Massenträgheit von Rotor und Trommel sowie die Startbedingungen, unter denen das System anläuft. Die Kombination 3 der inneren Zustände (Winkel, Winkelgeschwindigkeit, Winkelbeschleunigung) des Systems 2 Antrieb-Spultrommel ergibt als Ausgangsgröße die tatsächliche Winkelgeschwindigkeit ωist.
Als Regelgröße wird diese IST-Winkelgeschwindigkeit ωist im Normalbetrieb auf den Summenpunkt 5 vor dem Regler 1 geschaltet. Die Rückführung der Regelgröße ωist während des normalen Spulbetriebs zum Regler 1 erfolgt über einen Schalter 9 in der dargestellten Schaltposition.

Wie bereits dargelegt, ist bei geringen Drehzahlen, beispielsweise beim Hochlauf sowie beim Rückwärtslauf während der Fadensuche auf der Kreuzspulenoberfläche und beim Abwickeln des Fadenendes im Zusammenhang mit der Behebung eines Fadenbruchs, die Impulsfolge des die IST-Winkelgeschwindigkeit ermittelnden, grobauflösenden Winkelgebersystems zu ungenau. Innere Zustände des realen Systems, wie Strom und Winkelgeschwindigkeit, sind nur ungenau erfaßbar, so daß eine einwandfreie Regelung des elektronisch kommutierten Gleichstrommotors und damit ein ruckfreier Lauf der Spultrommel nicht mehr gegeben ist.

In diesem Fall wird erfindungsgemäß der bestehende Regelkreis über das Modell, den Beobachter B, umgeleitet, wie dies in Fig.2 dargestellt ist. Das heißt, der direkte Signalpfad der Regelgröße Winkelgeschwindigkeit ωist zum Summenpunkt 5 wird am Schalter 9 unterbrochen und der realen Regelstrecke S der Beobachter B als parallele Strecke zugeschaltet. Diesem Modell B wird unter anderem die vom Regler 1 kommende Stellgröße i, der jeweilige Antriebsstrom für den Spultrommelantrieb, zugeführt, wenn der Schalter 10 im Signalpfad der Stellgröße i zum Beobachter B geschlossen ist. Das heißt, in einem Rechner des Beobachters B wird anhand eines entsprechenden Rechenmodells das Verhalten der realen Strecke S, bei Vorgabe derselben Stellgröße i vom Regler 1, simuliert.

Das Modell B umfaßt das simulierte System 6 Antrieb-Spultrommel und die Kombination 7 der inneren Zustände des simulierten Systems 6. Die dem System 6 entnehmbaren inneren Zustände, der Strom iB sowie die Winkelgeschwindigkeit ωB sind Modellzustände, die über einen Rückkopplungsvektor 11, in dem eine Multiplikation mit Konstanten erfolgt, als Regelgröße ωb auf den Summenpunkt 5 und damit zum Regler 1 geführt werden, wo sie zur Regelung des realen Spultrommelantriebes der Strecke S Verwendung finden.

Die Kombination 7 der inneren Zustände des simulierten Systems 6 Antrieb-Spultrommel liefert die simulierte Winkelgeschwindigkeit ωB, die am Summenpunkt 8 der realen Winkelgeschwindigkeit ωist invers aufgeschaltet wird. Die resultierende Größe ωd wird während des Beobachter-Betriebs dem simulierten Antrieb-Spultrommel-System 6 respektive Beobachter B zugeführt und damit das dynamische Verhalten des simulierten Systems 6 dem Verhalten des realen Antrieb-Spultrommel-Systems 2 angeglichen.

Das Modell, der Beobachter B, bleibt dabei vorzugsweise mindestens so lange dem Regelkreis zugeschaltet, bis daß das grobauflösende Winkelgebersystem aufgrund genügend hoher Drehzahlen eine solch dichte Signalfolge liefert, die einen ruckfreien Lauf des Antriebes der Spultrommel gewährleistet.

Der Beobachter B kann auch ständig im Regelkreis geschaltet bleiben, wenn der Rechner des Modells B schnell genug ist. Jedoch ist dies aufgrund der hohen Signaldichte des Winkelgebers für einen ruckfreien Betrieb bei höheren Drehzahlen nicht nötig.

Das Ergebnis dieser Regelung ist durch die Kurve b in der Fig. 1 dargestellt. Wie aus der Kurve b ersichtlich, führt die Einbindung eines Beobachters B in die Regelung des Spultrommelantriebes zu einer Glättung der Signale, so daß statt eines gestuften Beschleunigens des Rotors des Antriebsmotors (Kurve a) der Anstieg der Winkelgeschwindigkeit ω des Antriebes, wie in der Kurve b dargestellt, in einer kaum wahrnehmbaren Wellenform erfolgt. Die Kurve b ist dabei aus inkrementalen kleinen Schritten aufgebaut.

## Patentansprüche

1. Spultrommelantrieb einer Kreuzspulen herstellenden Textilmaschine, dessen Antriebsmotor als elektrisch kommutierbarer Gleichstrommotor ausgebildet ist, und der zum Regeln der Drehzahl des Rotors einen Ausgangswert eines Winkelgebers verarbeitenden Regler (1) besitzt,
**dadurch gekennzeichnet,**
**daß** der Spultrommelantrieb einen Regelkreis mit einer realen Strecke (S) aufweist, welche im wesentlichen das reale System (2) Antrieb-Spultrommel mit einem grob auflösenden Winkelgebersystem (2a) beinhaltet, wobei der Regelkreis so ausgebildet ist, daß der Ausgangswert des Winkelgebersystems (2a) alternativ direkt dem Regler (1) oder einem simulierten Modell (B) zugeführt ist, welches im wesentlichen ein simuliertes System (6) Antrieb-Spultrommel beinhaltet, Teil des Regelkreises ist und mindestens eine Zustandsgröße (ωb) dem Regler (1) zuführt, die als Regelgröße dient, und daß das simulierte Modell (B) so ausgebildet ist, daß es dem Regler (1) auch zwischen den Meßimpulsen des grob auflösenden Winkelgebersystems (2a) eine dichte Signalfolge der Zustandsgröße (ωb) liefert und dazu zur ständigen Anpassung an die reale Strecke (S) mit Signalen des grob auflösenden Winkelgebersystems (2a) versorgt wird.

2. Spultrommelantrieb nach Anspruch 1, **dadurch gekennzeichnet, daß** das simulierte Modell (B) mittels eines Schalters (9) vom Regelkreis zur Regelung der Drehzahl des Rotors des Antriebsmotors trennbar ist.

3. Spultrommelantrieb nach Anspruch 2, **dadurch gekennzeichnet, daß** der Schalter (9) ein Schwellwertschalter ist, der die Verbindung des Regelkreises zum simulierten Modell (B) oberhalb eines vorgebbaren Wertes der Winkelgeschwindigkeit (ω) trennt.

4. Spultrommelantrieb nach einem der Ansprüche 1 bis 3, **dadurch gekennzeichnet, daß** das simulierte Modell (B) ein sogenannter Luenberger- Beobachter ist.

5. Spultrommelantrieb nach einem der Ansprüche 1 bis 4, **dadurch gekennzeichnet, daß** der Ausgang der realen Strecke (S) und der entsprechende Ausgang des simulierten Modells (B) auf einen Summenpunkt (8) invers geschaltet sind, wobei die Summe wiederum einem Eingang des simulierten Modells (B) zur dynamischen Angleichung des Modells an die reale Strecke (S) zugeführt wird.

6. Spultrommelantrieb nach einem der Ansprüche 1 bis 5, **dadurch gekennzeichnet, daß** die Winkelgeschwindigkeiten (ωist, ωb) der realen Strecke (S) oder des simulierten Modells (B) einem Summenpunkt (5)zuführbar sind, dem invers auch die Soll- Winkelgeschwindigkeit (ωsoll) zugeführt wird, und der mit seinem Ausgang an den Regler (1) angeschlossen ist.

7. Spultrommelantrieb nach einem der Ansprüche 1 bis 6, **dadurch gekennzeichnet, daß** der Eingang des Modells (B) an den Ausgang des Reglers (1) anschließbar ist.

## Claims

1. Winding drum drive of a cheese-producing textile machine of which the drive motor is designed as an electrically commutatable direct current motor and which has a controller (1) that processes an output value of an angle sensor, for controlling the speed of the rotor, **characterised in that** the winding drum drive comprises a control circuit including a real route (S), substantially comprising the real drive and winding drum system (2) with a roughly resolving angle sensor system (2a), the control circuit being so designed that the output value of the angle sensor system (2a) is alternatively delivered directly to the controller (1) or a simulated model (B), which substantially comprises a simulated drive and a winding drum system (6), is part of the control circuit and supplies the controller (1) with at least one state variable (ωb) which is used as a control variable, and that the simulated model (B) is designed in such a way that it also delivers to the controller (1) a close signal sequence of the state variable (ωb) between the measuring pulses of the roughly resolving angle sensor system (2a), and for this purpose is supplied with signals of the roughly resolving angle sensor system (2a) for continuous matching with the real route (S).

2. Winding drum drive according to claim 1, **characterised in that** the simulated model (B) may be separated by a switch from the control circuit for controlling the speed of the rotor of the drive motor.

3. Winding drum drive according to claim 2, **characterised in that** the switch (9) is a threshold value switch, which separates the connection of the control circuit to the simulated model (B) above a predeterminable value of the angular velocity (ω)

4. Winding drum drive according to any of claims 1 to 3, **characterised in that** the simulated model (B) is a Luenberger observer.

5. Winding drum drive according to any of claims 1 to 4, **characterised in that** the output of the real route (S) and the corresponding output of the simulated model (B) are inversely switched to a summing point (8), and the sum is in turn supplied to an input of the simulated model (B) for the dynamic matching of the model to the real route (S).

6. Winding drum drive according to any of claims 1 to 5, **characterised in that** angular velocities (ωactual, ωb) of the real route (S) or of the simulated model (B) may be supplied to a summing point (5), which is inversely also supplied with the setpoint angular velocity (ωsetpoint) and is connected by its output to the controller (1).

7. Winding drum drive according to any of claims 1 to 6, **characterised in that** the input of the model (B) is connectable to the output of the controller (1).

## Revendications

1. Dispositif d'entraînement du tambour d'enroulement d'une machine textile pour la production de bobines croisées, dont le moteur d'entraînement est réalisé sous forme de moteur à courant continu électriquement commutable, et qui possède pour réguler la vitesse de rotation du rotor un régulateur (1) traitant une valeur de sortie d'un capteur d'angle,
**caractérisé en ce que** le dispositif d'entraînement du tambour d'enroulement présente un circuit de régulation avec une section réelle (S) qui contient pour l'essentiel le système réel (2) dispositif d'entraînement / tambour d'enroulement avec un système (2a) de capteur d'angle à résolution grossière, le circuit de régulation étant conçu de telle sorte que la valeur de sortie du système (2a) de capteur d'angle peut être alternativement apportée directement au régulateur (1) ou à un modèle simulé (B) qui contient pour l'essentiel un système simulé (6) dispositif d'entraînement / tambour d'enroulement, fait partie du circuit de régulation et apporte au régulateur (1) au moins une variable d'état (ωb) qui sert de variable réglée, et **en ce que** le modèle simulé (B) est conçu de telle sorte qu'il fournit également au régulateur (1), entre les impulsions de mesure du système (2a) de capteur d'angle à résolution grossière, une succession rapprochée de signaux de la variable d'état (ωb), et est à cet effet, afin de s'adapter en permanence à la section réelle (S), alimenté en signaux du système (2a) de capteur d'angle à résolution grossière.

2. Dispositif d'entraînement de tambour d'enroulement selon la revendication 1, **caractérisé en ce que** le modèle simulé (B) peut, au moyen d'un commutateur (9), être déconnecté du circuit de régulation pour réguler la vitesse de rotation du rotor du moteur d'entraînement.

3. Dispositif d'entraînement de tambour d'enroulement selon la revendication 2, **caractérisé en ce que** le commutateur (9) est un commutateur à valeur de seuil, qui supprime la liaison du circuit de régulation au modèle simulé (B) au-dessus d'une valeur prédéterminable de la vitesse angulaire (ω).

4. Dispositif d'entraînement de tambour d'enroulement selon l'une des revendications 1 à 3, **caractérisé en ce que** le modèle simulé (B) est un « observateur de Luenberger ».

5. Dispositif d'entraînement de tambour d'enroulement selon l'une des revendications 1 à 4, **caractérisé en ce que** la sortie de la section réelle (S) et la sortie correspondante du modèle simulé (B) sont reliées avec des signes opposés à un point de totalisation (8), la somme étant elle-même apportée à une entrée du modèle simulé (B) pour l'adaptation dynamique du modèle à la section réelle (S).

6. Dispositif d'entraînement de tambour d'enroulement selon l'une des revendications 1 à 5, **caractérisé en ce que** les vitesses angulaires (ωist, ωb) de la section réelle (S) ou du modèle simulé (B) peuvent être apportées à un point de totalisation (5), qui reçoit également, avec un signe opposé, la vitesse angulaire de consigne (ωsoll), et dont la sortie est raccordée au régulateur (1).

7. Dispositif d'entraînement de tambour d'enroulement selon l'une des revendications 1 à 6, **caractérisé en ce que** l'entrée du modèle (B) peut être raccordée à la sortie du régulateur (1).
